# EUROPÄISCHE PATENTANMELDUNG

(11) **EP 1 561 986 A1**
(43) Veröffentlichungstag der Anmeldung: **10.08.2005**
(21) Anmeldenummer: 05002448.8
(22) Anmeldetag: 04.02.2005
(51) Int. Cl.: F16L 33/207, F16L 13/14

(54) **Fitting für Rohrleitungen**

(30) Priorität: 07.02.2004 EP 04002751
(71) Anmelder: Roth Werke GmbH, 35232 Dautphetal (DE)
(72) Erfinder:
(74) Vertreter: Rohmann, Michael, Dr.

(57) **Zusammenfassung**

Fitting (1) für Rohrleitungen (2) mit zumindest einem Anschlussstutzen (3), wobei an den Anschlussstutzen (3) das Ende einer Rohrleitung (2) anschließbar ist. An dem Anschlussstutzen (3) ist zumindest eine über den Umfang des Anschlussstutzens (3) umlaufende Aufnahmenut (4) vorgesehen. In der Aufnahmenut (4) ist ein über den Umfang des Anschlussstutzens (3) umlaufendes Dichtelement (5) aufgenommen. Die Oberfläche der Aufnahmenut (4) ist zur Verbesserung einer adhäsiven Haftung des Dichtelementes physikalisch und/oder mechanisch und/oder chemisch vorbehandelt. Das Dichtelement (5) ist in die vorbehandelte Aufnahmenut (4) eingespritzt.

## Beschreibung

Die Erfindung betrifft einen Fitting bzw. Pressfitting für Rohrleitungen mit zumindest einem Anschlussstutzen, wobei an den Anschlussstutzen das Ende einer Rohrleitung anschließbar ist, wobei an dem Anschlussstutzen zumindest eine über den Umfang des Anschlussstutzens umlaufende Aufnahmenut vorgesehen ist und wobei ein über den Umfang des Anschlussstutzens umlaufendes Dichtelement in der Aufnahmenut aufgenommen ist. - Die Erfindung bezieht sich vorzugsweise auf einen Fitting bzw. Pressfitting mit mehr als einem Anschlussstutzen, beispielsweise einen T-förmigen Fitting mit drei Anschlussstutzen für den Anschluss der Enden von Rohrleitungen.

Bei den aus der Praxis bekannten Fittings der eingangs genannten Art wird das Ende einer anzuschließenden Rohrleitung entweder auf den Anschlussstutzen aufgeschoben oder in den Anschlussstutzen eingeschoben. Wenn zur Herstellung der Verbindung das Ende der Rohrleitung auf den Anschlussstutzen aufgeschoben werden muss, so ist am Außenumfang des Anschlussstutzens zumindest ein Dichtelement vorgesehen. Dieses Dichtelement ist in der Regel als Dichtring bzw. O-Ring ausgebildet, der in eine entsprechende Aufnahmenut am Außenumfang des Anschlussstutzens eingepasst wird. Zunächst ist zu bemerken, dass diese Montage des Dichtringes nicht immer fehlerfrei vonstatten geht. Es kommt vor, dass der Dichtring nicht an allen Stellen exakt in seiner vorgesehenen Position angeordnet ist. Das kann später ggf. Undichtigkeiten im Verbindungsbereich von Rohrleitung und Anschlussstutzen hervorrufen.

Die Verbindung zwischen dem Ende einer Rohrleitung und einem Anschlussstutzen wird wie folgt hergestellt. Wenn das Ende der Rohrleitung auf den Anschlussstutzen (mit über seinen Außenumfang verlaufenden Dichtringen) aufgeschoben werden soll, wird vorher eine Presshülse über dem Anschlussstutzen positioniert, die den Anschlussstutzen mit radialem Abstand umgibt. Das Ende der Rohrleitung wird dann zwischen Presshülse und Anschlussstutzen auf den Anschlussstutzen aufgeschoben. Zur Fixierung dieser Verbindung wird anschließend die Presshülse mit einem Presswerkzeug verpresst, so dass sich das Ende der Rohrleitung plastisch verformt. Auf diese Weise kommt ein auf dem Anschlussstutzen vorgesehener Dichtring in dichtenden Kontakt mit dem Rohrleitungsende.

Bei den bekannten Fittingen mit O-Ringen als Dichtelementen kommt es beim Herstellen der Verbindung mit einer Rohrleitung nicht selten zu Beschädigungen des O-Ringes, die aufgrund der montagebedingten Vorspannung des O-Ringes zum Reißen führen können. Diese Beschädigungen können insbesondere beim Aufschieben der Rohrleitung auftreten. Das gilt vor allem für Fittinge, bei denen die O-Ringe aus ihrer Aufnahmenut herausragen. Außerdem können die O-Ringe bei der Montage der Rohrleitung relativ leicht in einen anderen Bereich des Anschlussstutzens verschoben werden. Das kommt insbesondere vor, wenn die Vorspannung des O-Ringes nicht ausreichend ist. In diesen Fällen ist die Dichtfunktion nicht mehr gewährleistet.

Demgegenüber liegt der Erfindung das technische Problem zugrunde, einen Fitting der eingangs genannten Art anzugeben, bei dem nach Herstellung der Verbindung mit einer Rohrleitung langfristig eine optimale Dichtwirkung gewährleistet ist.

Zur Lösung dieses technischen Problems lehrt die Erfindung einen Fitting bzw. Pressfitting für Rohrleitungen der eingangs genannten Art, welcher dadurch gekennzeichnet ist, dass die Oberfläche der Aufnahmenut zur Verbesserung einer adhäsiven Haftung des Dichtelementes in der Aufnahmenut physikalisch und/oder mechanisch und/oder chemisch vorbehandelt ist und dass das Dichtelement in die vorbehandelte Aufnahmenut eingespritzt ist.

Einspritzen des Dichtelementes in die Aufnahmenut meint im Rahmen der Erfindung, dass ein Dichtwerkstoff mit Hilfe eines Spritzwerkzeuges bzw. eines Dosierwerkzeuges in die Aufnahmenut eingespritzt wird. Das Aufbringen des Dichtwerkstoffes bzw. des Dichtelementes erfolgt also gleichsam in situ. Es liegt im Rahmen der Erfindung, dass der eingespritzte bzw. aufgespritzte Dichtwerkstoff nach dem Aufbringen zum Dichtelement bzw. zum Dichtring gleichsam aushärtet.

Nach besonders bevorzugter Ausführungsform der Erfindung verläuft die Aufnahmenut mit dem darin aufgenommenen Dichtelement über den Außenumfang des Anschlussstutzens und das Ende der Rohrleitung ist auf den Anschlussstutzen aufschiebbar. Dabei liegt es im Rahmen der Erfindung, dass der Anschlussstutzen von einer, zweckmäßigerweise am Fitting fixierten Presshülse umgeben wird, so dass das Ende der Rohrleitung zwischen Anschlussstutzen und Presshülse einschiebbar bzw. auf den Anschlussstutzen aufschiebbar ist. Rohrleitungsende, Anschlussstutzen und Presshülse sind nach einer Ausführungsform der Erfindung zylinderförmig ausgebildet. Wenn das Rohrleitungsende zwischen Presshülse und Anschlussstutzen auf den Anschlussstutzen aufgeschoben wurde, kann anschließend das Verpressen der Presshülse erfolgen. Dabei wird das Rohrleitungsende ebenso wie die Presshülse plastisch verformt und auf diese Weise kommt das Dichtelement in dichtenden Kontakt mit dem Rohrleitungsende.

Nach einer anderen Ausführungsform der Erfindung verläuft die Aufnahmenut mit dem darin aufgenommenen Dichtelement über den Innenumfang des Anschlussstutzens. Gemäß dieser Ausführungsform wird also das Ende der Rohrleitung in den Anschlussstutzen eingeschoben. Anschließend wird dann der Anschlussstutzen des Fittings (Pressfittings) verpresst, so dass der Anschlussstutzen plastisch verformt wird und das Dichtelement in dichtenden Kontakt mit dem im Anschlussstutzen aufgenommenen Rohrleitungsende kommt.

Erfindungsgemäß wird die Oberfläche der Aufnahmenut vor dem Einspritzen des Dichtelementes physikalisch und/oder mechanisch und/oder chemisch vorbehandelt. Oberfläche der Aufnahmenut meint dabei die Oberfläche des Nutgrundes und/oder die Oberfläche der Nutflanken bzw. Nutwände. Es liegt im Rahmen der Erfindung, dass bei einer mechanischen Vorbehandlung die Oberfläche der Aufnahmenut mechanisch aufgeraut wird. Diese mechanische Aufrauung kann durch Schleifen und/oder durch Bürsten und/oder Schmirgeln und/oder durch Sandstrahlen erfolgen. Die chemische Vorbehandlung der Oberfläche der Aufnahmenut erfolgt insbesondere durch Beizen und/oder Phospatieren und/oder Ozonisieren. Die Oberfläche der Aufnahmenut kann auch mit einem geeigneten Lösungsmittel chemisch vorbehandelt werden. Nach einer Ausführungsform der Erfindung wird die Oberfläche der Aufnahmenut durch Grundierung mit einem Primer bzw. mit einem Haftmittel chemisch vorbehandelt.

Es liegt im Rahmen der Erfindung, dass die Oberfläche der Aufnahmenut durch Abflammen und/oder Korona-Entladung und/oder Plasma-Behandlung und/oder Flammpyrolyse physikalisch vorbehandelt ist. Zweckmäßigerweise findet die physikalische Vorbehandlung also als thermische und/oder elektrische Vorbehandlung statt. Plasma-Behandlung meint insbesondere die Anwendung eines Niederdruckplasma-Verfahrens. Nach sehr bevorzugter Ausführungsform der Erfindung findet lediglich eine physikalische Vorbehandlung der Oberfläche der Aufnahmenut statt, ohne dass also eine mechanische Vorbehandlung und/oder eine chemische Vorbehandlung durchgeführt wird.

Nach besonders bevorzugter Ausführungsform, der im Rahmen der Erfindung ganz besondere Bedeutung zukommt, wird die Oberfläche der Aufnahmenut durch Oberflächensilikatisierung physikalisch vorbehandelt. Es liegt dabei im Rahmen der Erfindung, dass die Oberflächensilikatisierung durch Flammpyrolyse erzeugt wird. Bei dieser Oberflächensilikatisierung wird durch Flammpyrolyse einer siliziumorganischen Verbindung, insbesondere eines Silans, eine festhaftende dünne Silikatschicht auf der Oberfläche der Aufnahmenut erzeugt. Bei dieser Ausführungsform der Erfindung kann eine überraschend starke Verankerung des erfindungsgemäß eingespritzten Dichtelementes erzielt werden.

Der Erfindung liegt zunächst die Erkenntnis zugrunde, dass das Dichtelement des erfindungsgemäßen Fittings auf einfache Weise sehr gezielt und präzise durch Einspritzen in der Aufnahmenut positioniert werden kann. Der Erfindung liegt weiterhin die Erkenntnis zugrunde, dass durch die erfindungsgemäße Vorbehandlung, insbesondere durch die physikalische Vorbehandlung einerseits und durch das anschließende Einspritzen des Dichtelementes andererseits eine sehr robuste Dichtung erzielt werden kann, die sich nach Herstellung der Verbindung mit der Rohrleitung durch eine langfristige optimale Dichtigkeit auszeichnet. Mit einem erfindungsgemäß angebrachten Dichtungselement kann nach dem Verpressen der Verbindung zwischen Rohrleitungsende und Fitting ein hervorragender Dichtungskontakt zwischen Dichtungselement und Rohrleitungsende verwirklicht werden, der auch langfristig im Betrieb der Rohrleitung erhalten bleibt.

Die erfindungsgemäß eingebrachten Dichtelemente zeichnen sich gegenüber den aus dem Stand der Technik bekannten einzubringenden O-Ringen durch weitere beachtliche Vorteile aus. Bei der Montage von O-Ringen in einer über den Innenumfang des Anschlussstutzens umlaufenden Aufnahmenut sollte die maximale Dehnung des Ringes im Einbauzustand 6 % für O-Ringe mit einem Innendurchmesser > 50 mm und 8 % für O-Ringe mit einem Innendurchmesser < 50 mm nicht überschreiten. Bei der Montage eines O-Ringes in einer über den Außenumfang des Anschlussstutzens umlaufenden Aufnahmenut sollte die Stauchung des Ringes beim Einbau 3 % nicht überschreiten. In der Praxis kommt es aber häufig zu einer Überschreitung dieser Grenzwerte. Bei einer solchen Überschreitung kommt es zu einer unzulässigen Querschnittsabnahme bzw. Querschnittszunahme der Dichtringe, die die Lebensdauer der Dichtung beeinträchtigt. Erfahrungsgemäß entspricht 1 % Dehnung des Innendurchmessers eines O-Ringes einer Verringerung der Schnurdicke um 0,5 %. Fernerhin müssen die O-Ringe normalerweise radial um 10 bis 20 % der Schnurdicke zusammengepresst werden um eine ausreichende Dichtwirkung zu erlangen. Hierzu müssen die O-Ringe entsprechend dimensioniert werden bzw. entsprechend aufwendig dimensioniert werden. - Dagegen kann ein erfindungsgemäß eingebrachtes Dichtelement im Vergleich zu den O-Ringen geringer dimensioniert werden und führt nichtsdestoweniger zu einer erhöhten Dichtwirkung. Die überraschend hohe Dichtwirkung im Vergleich zu den O-Ringen kommt insbesondere dadurch zu Stande, dass das erfindungsgemäße Dichtelement aufgrund des Einspritzens sehr formschlüssig an der Aufnahmenutkontur anliegt und aufgrund dessen sowie aufgrund der erfindungsgemäßen Vorbehandlung der Aufnahmenutoberfläche überraschend fest adhäsiv an die Aufnahmenutoberfläche gebunden ist. Es ist darauf hinzuweisen, dass im Gegensatz zu den bekannten Dichtelementen keine montagebedingten Dehn- oder Stauchverluste auftreten.

Es liegt im Rahmen der Erfindung, dass das in die Aufnahmenut eingespritzte Dichtelement alle Bereiche des Nutgrundes der Aufnahmenut vollständig und hohlraumfrei ausfüllt. Es liegt fernerhin im Rahmen der Erfindung, dass das Dichtelement sowohl formschlüssig als auch kraftschlüssig in dieser Aufnahmenut des Anschlussstutzens aufgenommen ist.

Zweckmäßigerweise besteht das Dichtelement aus zumindest einem Polymeren bzw. aus zumindest einem Kunststoff. Vorzugsweise besteht das Dichtelement aus zumindest einem Elastomeren. Nach besonders bevorzugter Ausführungsform der Erfindung besteht das Dichtelement aus einem Silikon. Dabei handelt es sich vorzugsweise um platinvernetzendes Silikon. Bei Verwendung von platinvernetzendem Silikon für das erfindungsgemäße Dichtelement wird zweckmäßigerweise eine thermische Nachhärtung des eingespritzten Dichtelementes durchgeführt. Es liegt fernerhin im Rahmen der Erfindung, dass der Dichtungswerkstoff, aus dem das Dichtelement gebildet wird, Füllstoffe wie Kieselsäuren enthält, mit denen eine gewünschte Härte des Dichtelementes eingestellt werden kann. Wenn derartige, eine bestimmte Härte gewährleistende Füllstoffe verwendet werden, ist in der Regel eine thermische Nachhärtung des Dichtelementes nicht mehr erforderlich.

Nach besonders bevorzugter Ausführungsform der Erfindung weist das Dichtelement eine Härte zwischen Shore A 45 und Shore A 90 auf. Dichtelemente mit dieser Härte haben sich besonders bewährt.

Eine Ausführungsform der Erfindung ist dadurch gekennzeichnet, dass das Dichtelement aus zumindest einem Kunststoff aus der Gruppe "Polyamid, Methacrylatharz, Epoxidharz" besteht.

Nach sehr bevorzugter Ausführungsform, der im Rahmen der Erfindung ganz besondere Bedeutung zukommt, ragt das eingespritzte Dichtelement aus der Aufnahmenut heraus. Mit anderen Worten steht ein Teil des Dichtelementes über die Kanten der Nutwände bzw. Nutflanken vor. Vorzugsweise ragt das eingespritzte Dichtelement insgesamt mit zumindest 0,5 %, vorzugsweise mit zumindest 2 % seines Volumens aus der Aufnahmenut heraus. Dabei ist eine Ausführungsform dadurch gekennzeichnet, dass das Dichtelement nur über einen Teil seines Umfangs aus der Aufnahmenut herausragt. Es liegt weiterhin im Rahmen der Erfindung, dass das Dichtelement mit der Oberseite bzw. mit der Oberkante der am weitesten aus der Anschlussstutzenoberfläche im Anschlussbereich der Rohrleitung herausragenden Stutzenprofilierung entweder fluchtet oder bevorzugt gegenüber dieser Oberseite bzw. Oberkante der Stutzenprofilierung zurückgesetzt ist. Bei den Stutzenprofilierungen handelt es sich insbesondere um über den Umfang des Anschlussstutzens umlaufende Rippen. Mit anderen Worten ragt also das Dichtelement im Aufschiebebereich der Presshülse (Anschlussbereich der Rohrleitung) nicht über die höchste Stutzenprofilierung bzw. umlaufende Rippe des Anschlussstutzens hervor. Es fluchtet entweder mit der höchsten Erhebung des Anschlussstutzens oder ist vorzugsweise gegenüber dieser höchsten Erhebung zurückgesetzt. Die vorstehende erfindungsgemäße Ausführungsform zeichnet sich durch ganz besondere Vorteile aus, die nachfolgend erläutert werden.

Wie eingangs bereits erläutert wird zum Herstellen einer Verbindung das Ende der Rohrleitung zwischen Presshülse und Anschlussstutzen auf den Anschlussstutzen aufgeschoben und zur Fixierung dieser Verbindung wird anschließend die Presshülse mit einem Presswerkzeug verpresst, so dass sich das Ende der Rohrleitung plastisch verformt. Dadurch kommt ein auf dem Anschlussstutzen angeordneter Dichtring in dichtenden Kontakt mit dem Rohrleitungsende. Bei Installationsarbeiten auf Baustellen muss in der Regel eine Vielzahl solcher Verbindungen hergestellt werden. Um festzustellen, ob alle Verbindungen ordnungsgemäß hergestellt bzw. verpresst wurden, wird normalerweise zur Probe ein Medium unter Druck bei der Abnahme der Installation durch das Rohrsystem geleitet. Man geht dabei davon aus, dass sich nicht ordnungsgemäß hergestellte Verbindungen durch Leckagen bemerkbar machen. Bei den bekannten Fittingen kann es aber vorkommen, dass beim Aufschieben des Rohrleitungsendes auf den Anschlussstutzen der auf dem Anschlussstutzen vorhandene Dichtring bereits in mehr oder weniger dichtenden Kontakt mit der Innenseite des Rohrleitungsendes kommt. Wenn an einer solchen Verbindungsstelle das Verpressen der Verbindung vergessen wird, ist es möglich, dass bei der beschriebenen Druckprobe eine Leckage an dieser Verbindungsstelle nicht festgestellt wird. Das führt dazu, dass die Rohrinstallation mit einer nicht verpressten Verbindungsstelle in Betrieb genommen wird. Zu einem späteren Zeitpunkt kommt es dann aber während des Betriebes des Rohrleitungssystems aufgrund von Druckstößen der durch das Rohrleitungssystem geführten fluiden Medien zu unerwünschten Leckagen.

Der Erfindung liegt dagegen die Erkenntnis zugrunde, dass aufgrund der erfindungsgemäßen Ausgestaltung der Dichtzone des Fittings bei einer Druckerprobung des Rohrleitungssystems nicht ordnungsgemäß hergestellte bzw. nicht verpresste Verbindungen zwischen Anschlussstutzen und Rohrleitungsende ohne weiteres festgestellt werden können. Aufgrund der Tatsache, dass das Dichtelement mit der höchsten Stutzenprofilierung entweder fluchtet oder vorzugsweise gegenüber dieser höchsten Stutzenprofilierung zurückgesetzt ist, kann es beim Aufschieben des Rohrleitungsendes noch keine Toleranzpaarungen zwischen Dichtelement und Rohrleitungsende geben, die nur eine vorläufige Dichtigkeit gewährleisten würden bzw. eine ausreichende Dichtigkeit bei einer Druckerprobung lediglich vortäuschen könnten. Andererseits kann aufgrund der Tatsache, dass das Dichtelement erfindungsgemäß aus der Aufnahmenut herausragt bei einem Verpressen der Verbindung zwischen Rohrleitungsende und Fitting ein optimaler Dichtungskontakt zwischen Dichtelement und Rohrleitungsende verwirklicht werden, so dass eine langfristig funktionssichere Dichtigkeit im Betrieb gewährleistet ist. Dazu tragen aber auch erfindungserheblich die erfindungsgemäßen Merkmale bei, wonach das Dichtelement eingespritzt ist und wonach vor dem Einspritzen die Aufnahmenutoberfläche insbesondere physikalisch vorbehandelt wird. Der Erfindung liegt insoweit die Erkenntnis zugrunde, dass die Kombination aus der erfindungsgemäßen Anordnung des Dichtelementes (Fluchten bzw. Zurücksetzen gegenüber der höchsten Stutzenprofilierung und Herausragen aus der Aufnahmenut) und aus der Vorbehandlung der Aufnahmenutoberfläche sowie aus dem Einspritzen des Dichtelementes ganz besondere überraschende Vorteile bedingt.

Es liegt im Rahmen der Erfindung, dass der Anschlussstutzen aus einem Kunststoff und/oder aus einem Metall besteht. Nach einer Ausführungsform besteht der Anschlussstutzen lediglich aus Kunststoff und zweckmäßigerweise besteht gemäß dieser Ausführungsform der gesamte Fitting aus dem Kunststoff. Bei dem Kunststoff handelt es sich nach besonders bevorzugter Ausführungsform der Erfindung um Polyphenylensulfon (PPSU). Gemäß einer anderen Ausführungsform der Erfindung besteht der Anschlussstutzen lediglich aus einem Metall (abgesehen von dem Dichtelement bzw. den Dichtelementen). Zweckmäßigerweise besteht dann der gesamte Fitting aus dem genannten Metall. Nach besonders bevorzugter Ausführungsform der Erfindung besteht der Anschlussstutzen bzw. der Fitting aus einer Kupferlegierung bzw. aus Rotguss.

Es liegt im Rahmen der Erfindung, dass das Dichtelement einen kreisförmigen oder einen ellipsenförmigen Querschnitt aufweist. Beispielsweise ist also ein Dichtelement mit kreisförmigem Querschnitt der bevorzugten Zylinderform des zugeordneten Anschlussstutzens angepasst. Grundsätzlich sind aber auch andere Geometrien für das Dichtelement des Fittings möglich.

Weiter oben wurde bereits erläutert, dass das Dichtelement des erfindungsgemäßen Fittings in die Aufnahmenut des Anschlussstutzens eingespritzt wird. Zweckmäßigerweise erfolgt dieses Einspritzen mit einem geeigneten Spritzwerkzeug bzw. Dosierwerkzeug, das mit einer Düse bzw. mit einer Dosiernadel ausgerüstet ist. Nach einer Ausführungsform der Erfindung wird das Dichtelement mit einem Zweikomponenten-Dosierwerkzeug in die Aufnahmenut eingebracht. Bei den beiden Komponenten handelt es sich vorzugsweise um Silikon und eine Härterkomponente für das Silikon.

Nachfolgend wird die Erfindung anhand einer lediglich ein Ausführungsbeispiel darstellenden Zeichnung näher erläutert. Es zeigen in schematischer Darstellung:
- Fig. 1: eine Draufsicht auf einen erfindungsgemäßen Fitting,
- Fig. 2: einen Schnitt durch den Gegenstand nach Fig. 1 ausschnittsweise und
- Fig. 3: den Gegenstand gemäß Fig. 2 in einer anderen Funktionsstellung.

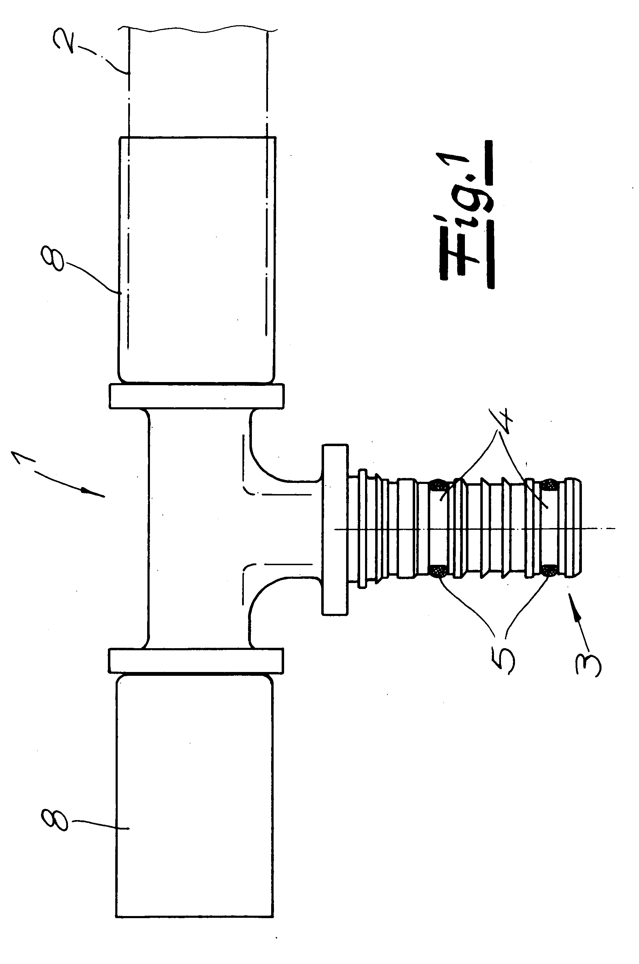

Die Figuren zeigen einen erfindungsgemäßen Fitting 1 für Rohrleitungen 2 und in Fig. 1 ist eine Ausführungsform in Form eines T-förmigen Fittings 1 mit drei Anschlussstutzen 3 dargestellt. An jeden Anschlussstutzen 3 ist jeweils ein Ende einer Rohrleitung 2 anschließbar. In Fig. 1 ist eine Rohrleitung 2 strichpunktiert dargestellt. Im Ausführungsbeispiel sind an jedem Anschlussstutzen 3 zwei über den Außenumfang des Anschlussstutzens 3 umlaufende Aufnahmenuten 4 vorgesehen. Diese Aufnahmenuten 4 sind in der Fig. 1 lediglich an dem nach unten weisenden Anschlussstutzen 3 erkennbar. Über die beiden anderen Anschlussstutzen 3 ist in der Funktionsstellung gemäß Fig. 1 bereits eine Presshülse 8 geschoben, die zweckmäßigerweise am Fitting 1 fixiert ist. Die Presshülse 8 dient zur Herstellung einer Pressverbindung zwischen dem Ende der Rohrleitung 2 und dem Fitting 1.

Jeder Anschlussstutzen 3 weist zwei über den Umfang des Anschlussstutzens 3 umlaufende Dichtelemente 5 auf, die jeweils in einer Aufnahmenut 4 aufgenommen sind. Erfindungsgemäß wird das im Ausführungsbeispiel ringförmig ausgebildete Dichtelement in die Aufnahmenut 4 eingespritzt, und zwar mit einem in den Figuren nicht dargestellten Dosierwerkzeug. Der Dichtwerkstoff wird dabei zweckmäßigerweise mittels einer Dosiernadel in die Aufnahmenut 4 kontinuierlich eingespritzt. Vor dem Einspritzen des Dichtwerkstoffes wurde in nicht dargestellter Weise die Oberfläche der Aufnahmenut 4 physikalisch vorbehandelt und zwar wurde eine Oberflächensilikatisierung durch Flammpyrolyse an der Oberfläche der Aufnahmenut 4 durchgeführt.

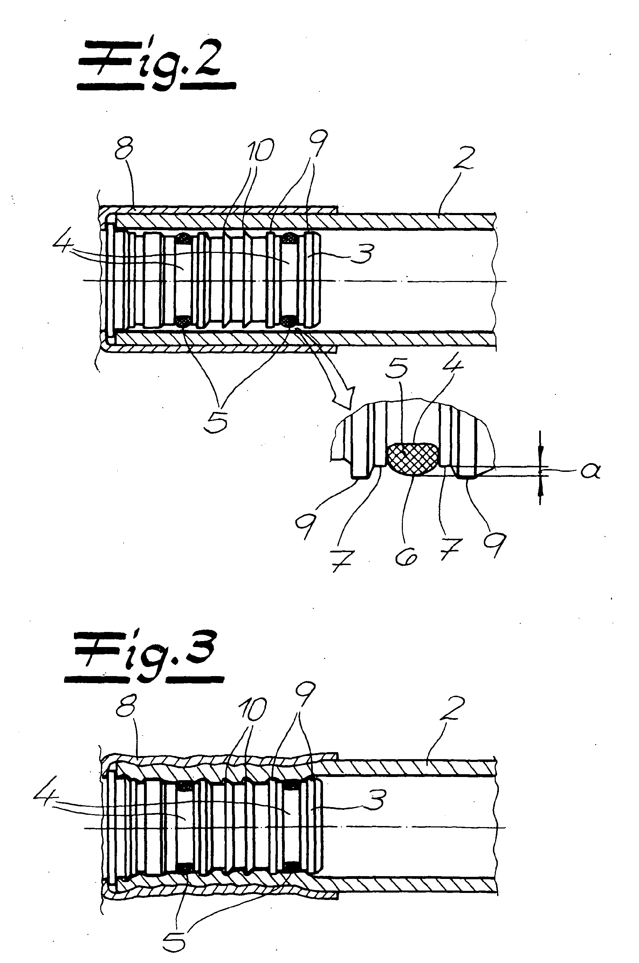

Insbesondere in den Fig. 2 und 3 ist erkennbar, dass die beiden Aufnahmenuten 4 jedes Anschlussstutzens 3 mit dem darin aufgenommenen Dichtelement 5 über den Außenumfang des Anschlussstutzens verlaufen. Das Ende einer Rohrleitung 2 ist auf einen zugeordneten Anschlussstutzen 3 aufschiebbar (Fig. 2) und das Ende der Rohrleitung 2 befindet sich dann also zwischen der Presshülse 8 und dem Anschlussstutzen 3.

In Fig. 2 ist weiterhin erkennbar, dass ein Dichtelement 5 nach sehr bevorzugter Ausführungsform der Erfindung entlang seiner gesamten Erstreckung über den Umfang des Anschlussstutzens 3 aus der Aufnahmenut 4 herausragt. Mit anderen Worten steht das Dichtelement 5 teilweise aus der Aufnahmenut 4 hervor und zwar um einen Abstand a zwischen der Oberseite 6 des Dichtelementes 5 und den Kanten 7 der Aufnahmenut 4. Allerdings ist das Dichtelement 5 bzw. die Oberseite 6 des Dichtelementes 5 gegenüber den als Rippen 9, 10 ausgebildeten Stutzenprofilierungen zurückgesetzt. Mit anderen Worten ragt das Dichtelement 5 nicht über die Oberkante bzw. Oberseiten dieser Rippen 9, 10 hervor, sondern liegt unterhalb der Oberkante bzw. Oberseiten der Rippen 9, 10.

Das Dichtelement 5 ist vorzugsweise und im Ausführungsbeispiel nach den Figuren ringförmig bzw. im Querschnitt kreisförmig ausgebildet und somit an die im Ausführungsbeispiel dargestellte Zylinderform des Anschlussstutzens 3 angepasst. Zweckmäßigerweise besteht das Dichtelement 5 bzw. der eingespritzte Dichtring aus einem Elastomeren, vorzugsweise aus Silikon. Das Dichtelement 5 hat dabei bevorzugt eine Härte zwischen Shore A 45 und Shore A 90.

Fig. 2 zeigt die noch nicht fertiggestellte Verbindung zwischen Anschluss stutzen 3 und Ende der Rohrleitung 2 bzw. die noch nicht verpresste Verbindung. Sollte hier das Verpressen bzw. das Zusammenpressen der Presshülse 8 vergessen werden, so ist erkennbar, dass aufgrund der vorhandenen Spalten beim Durchleiten eines Mediums (vor allem unter Druck) Leckagen auftreten. Das Dichtelement 5 befindet sich nämlich im Funktionszustand gemäß Fig. 2 aufgrund des Abstandes zu den Oberkanten bzw. Oberseiten der Rippen 9, 10 nicht in dichtendem Kontakt mit dem Ende der Rohrleitung 2. Wenn also eine Druckprobe an dem erfindungsgemäßen Fitting 1 durchgeführt wird, so weist eine auftretende Leckage auf die noch nicht verpresste Verbindung hin.

Wenn der in Fig. 2 dargestellte Funktionszustand erreicht wird, so muss normalerweise die Presshülse 8 mit Hilfe eines Presswerkzeuges zusammengepresst werden, so dass das Ende der Rohrleitung 2 mit der Presshülse plastisch verformt wird und auf diese Weise das Ende der Rohrleitung 2 in dichtenden Kontakt mit dem Dichtelement 5 kommt. Dieser verpresste Zustand bzw. die ordnungsgemäß fertiggestellte Verbindung zwischen Anschlussstutzen 3 und Ende der Rohrleitung 2 ist in der Fig. 3 dargestellt. Hier ist auch erkennbar, dass ein dichtender Kontakt zwischen dem Ende der Rohrleitung 2 und dem Dichtelement 5 hergestellt werden konnte. Mit dem erfindungsgemäß eingespritzten und positionierten Dichtelement kann eine überraschend funktionssichere Dichtigkeit erreicht werden.

## Patentansprüche

1. Fitting (1) für Rohrleitungen (2) mit zumindest einem Anschlussstutzen (3), wobei an den Anschlussstutzen (3) das Ende einer Rohrleitung (2) anschließbar ist,
wobei an dem Anschlussstutzen (3) zumindest eine über den Umfang des Anschlussstutzens (3) umlaufende Aufnahmenut (4) vorgesehen ist,
wobei ein über den Umfang des Anschlussstutzens (3) umlaufendes Dichtelement (5) in der Aufnahmenut (4) aufgenommen ist, **dadurch gekennzeichnet,**
**dass** die Oberfläche der Aufnahmenut (4) zur Verbesserung einer adhäsiven Haftung des Dichtelementes (5) physikalisch und/oder mechanisch und/oder chemisch vorbehandelt ist
und **dass** das Dichtelement (5) in die vorbehandelte Aufnahmenut (4) eingespritzt ist.

2. Fitting nach Anspruch 1, wobei die Aufnahmenut (4) mit dem darin aufgenommenen Dichtelement (5) über den Außenumfang des Anschlussstutzens (3) verläuft und wobei das Ende der Rohrleitung (2) auf den Anschlussstutzen (3) aufschiebbar ist.

3. Fitting nach einem der Ansprüche 1 oder 2, **dadurch gekennzeichnet, dass** die Oberfläche der Aufnahmenut (4) durch Abflammen und/oder Korona-Entladung und/oder Plasma-Behandlung und/oder Flammpyrolyse physikalisch vorbehandelt ist.

4. Fitting nach einem der Ansprüche 1 bis 3, **dadurch gekennzeichnet, dass** die Oberfläche der Aufnahmenut (4) durch Oberflächensilikatisierung physikalisch vorbehandelt ist.

5. Fitting nach einem der Ansprüche 1 bis 4, **dadurch gekennzeichnet, dass** das Dichtelement (5) aus zumindest einem Elastomeren besteht.

6. Fitting nach einem der Ansprüche 1 bis 5, **dadurch gekennzeichnet, dass** das Dichtelement (5) aus Silikon besteht.

7. Fitting nach einem der Ansprüche 1 bis 5, **dadurch gekennzeichnet, dass** das Dichtelement (5) aus zumindest einem Kunststoff aus der Gruppe "Polyamid, Methacrylatharz, Epoxidharz" besteht.

8. Fitting nach einem der Ansprüche 1 bis 7, **dadurch gekennzeichnet, dass** das eingespritzte Dichtelement (5) mit zumindest 0,5 % seines Volumens aus der Aufnahmenut (4) herausragt.

9. Fitting nach einem der Ansprüche 1 bis 8, **dadurch gekennzeichnet, dass** die Oberseite des Dichtelementes (5) mit der Oberseite der am weitesten aus der Anschlussstutzenoberfläche im Anschlussbereich der Rohrleitung (2) herausragenden Stutzenprofilierung entweder fluchtet oder vorzugsweise gegenüber der Oberseite der Stutzenprofilierung zurückgesetzt ist.
